# EUROPÄISCHE PATENTSCHRIFT

(11) **EP 3 623 775 B1**
(45) Veröffentlichungstag und Bekanntmachung des Hinweises auf die Patenterteilung: **21.04.2021**
(21) Anmeldenummer: 19184417.4
(22) Anmeldetag: 04.07.2019
(51) Int. Cl.: G01G 19/52, G06Q 10/08, A47F 1/04, A47F 5/16

(54) **AUSGABEVORRICHTUNG**
DISPENSING DEVICE
DISPOSITIF DE DISTRIBUTION

(30) Priorität: 13.09.2018 DE 102018122430
(43) Veröffentlichungstag der Anmeldung: 18.03.2020
(73) Patentinhaber: Wanzl GmbH & Co. KGaA, 89340 Leipheim (DE)
(72) Erfinder: Hämmerle, Jürgen, 89312 Günzburg (DE); Benz, Markus, 89344 Aislingen (DE); Wolf, Alexis, 89340 Leipheim (DE)

(56) Entgegenhaltungen:
- WO-A2-2013/059716
- DE-A1-102016 123 717
- DE-A1-102017 104 191
- US-A1- 2018 082 246

## Beschreibung

Die Erfindung betrifft eine Ausgabevorrichtung mit den Merkmalen im Anspruch 1.

Solche Ausgabevorrichtung sind in Form offener oder verschlossener Regal- bzw. Ausgabeeinheiten aus Selbstbedienungsläden bekannt.

So offenbart z.B. die DE 10 2017 104 191 A1 eine solche Ausgabevorrichtung für Waren. Es ist ein Gestell vorgesehen, in diesem ist eine Aufnahme für Waren angeordnet. Insbesondere sind zum Schutz der Ware Aufnahmeräume gebildet, die in Form von Einsätzen ausgeführt sind. Eine frontseitige Entnahme ist bei solchen Ausgabevorrichtungen üblich.

Aus der US 9,984,355 B2 ist ferner eine Ausgabevorrichtung für Ware bekannt, die über Sensoreinheiten das Gewicht der Ware erfassen kann, die sich auf einer Etage der Ausgabevorrichtung befindet. Weiterhin können diese Daten an eine Datenbank weitergegeben werden. Ferner ist eine Schnittstelle zu einem Bestandsmanagementprogramm gegeben.

Weiterhin ist aus der DE 10 2016 123 717 A1 eine Ausgabevorrichtung bekannt, die rückseitig mit Backwaren befüllt werden kann. Die Entnahme der Backwaren erfolgt vorderseitig. In der Ausgabevorrichtung ist mindestens ein Warenaufnahmeraum vorgesehen, der mit einer Neigung von 20° bis 60° versehen ist. Die Backwaren passieren eine Messeinrichtung auf ihrem Weg von der Rückseite zur Vorder-/ Entnahmeseite der Ausgabevorrichtung. Es findet eine Messeinrichtung, in Form eines Kraftaufnehmes, z.B. eine Wägezelle, Einsatz, die die Masse der Backwaren erfasst und an eine externe Steuereinheit weitergibt. Der Kraftaufnehmer ist neben oder unterhalb der Messfläche angeordnet.

In der WO 2013/059716 A2 sind Sensoren zur Erfassung von Gewicht beschrieben, die bei Regalböden eines Supermarktes Einsatz finden.

Die Aufgabe der vorliegenden Erfindung besteht daher darin, eine Ausgabevorrichtung dahingehend weiterzuentwickeln, dass verschiedene Waren in dieser dargeboten werden können, wobei die Gewichtserfassung weitestgehend wartungsfrei erfolgen, eine Verschmutzung der Sensorik vermieden werden und zudem auf einer relativ großen Fläche eine genaue Erfassung möglich sein soll.

Die Erfindung löst die Aufgabe mit den Merkmalen im kennzeichnenden Teil des Hauptanspruchs.

Danach ist vorgesehen, dass jede Aufnahme für Ware mit mindestens einem Wägesensor verknüpft ist.

Weitere vorteilhafte Ausführungen sind in den Unteransprüchen beschrieben.

Der mindestens eine Wägesensor ist an einer seitlichen Wandung des Einsatzes angeordnet.

Es können vier Wägesensoren Einsatz finden.

Hierbei ist denkbar, dass die vier Wägesensoren gegenüberliegend an der seitlichen Wandung des Einsatzes angeordnet sind.

Als Wägesensoren finden Dehnungsmessstreifen Einsatz.

Durch die Verwendung solcher Dehnungsmessstreifen, angebracht an der seitlichen Wandung des Einsatzes, ist eine Verschmutzung dieser nahezu ausgeschlossen.

Weiterhin kann vorgesehen sein, dass ein Herausnehmen der Ware und ein Zurücklegen der Ware von den Wägesensoren erkannt wird.

Denkbar ist weiterhin, dass der Einsatz eine Größe im Bereich von ca. 80 bis 100 cm auf 45 bis 100 cm aufweist.

Die Waren können pro Stück ca. eine Masse in einem Bereich von 20g bis 2 kg aufweisen.

Die vorteilhafte Anzahl von vier Wägesensoren, zusammen mit der Anordnung dieser gegenüberliegend an der seitlichen Wandung des Einsatzes, ermöglicht eine genaue Auswertung auch bei einem relativ großen Einsatz.

Die Erfindung wird anhand von zwei Ausführungsbeispielen näher erläutert. Es zeigt
- Fig. 1: eine Ausgabevorrichtung in Vorderansicht;
- Fig. 2: einen Einsatz mit Aufnahme in perspektivischer Ansicht;
- Fig. 3.: eine weitere Variante einer Ausgabevorrichtung zur Anord-nung an eine Wand in perspektivischer Ansicht, sowie
- Fig. 4: eine solche zur Anordnung im Raum.

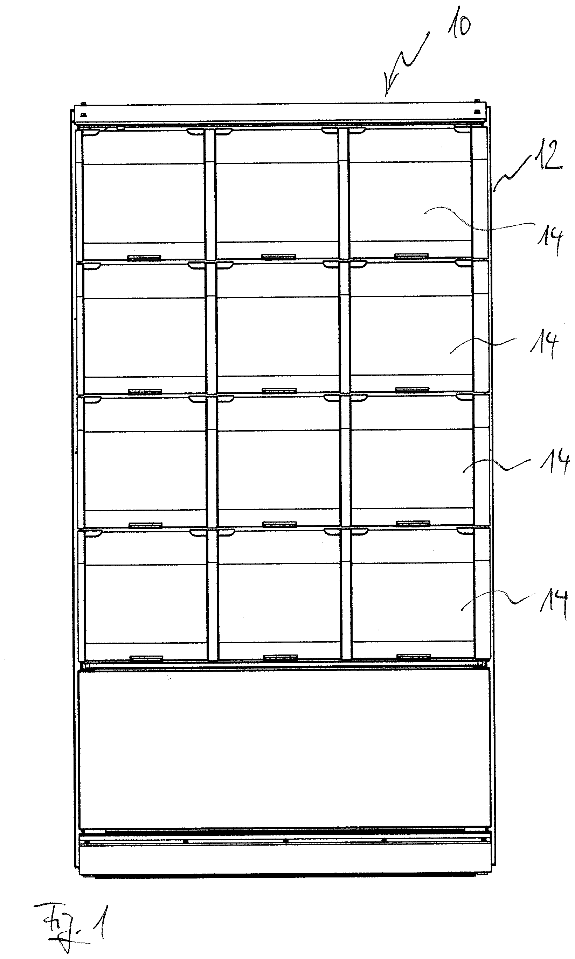

Figur 1 zeigt eine Ausgabevorrichtung 10 für Waren. Solche Waren können insbesondere Backwaren wie Brot, Brötchen oder dergleichen sein. Es kann sich aber auch um andere Waren handeln, die verpackt oder unverpackt in einem Selbstbedienungsmarkt angeboten werden. Die Ausgabevorrichtung 10 weist ein Gestell 12 auf. In diesem Gestell ist eine Reihe von Einsätzen 14 eingebracht. Jedes dieser Einsätze 14 bildet einen Warenaufnahmeraum 16. Der Warenaufnahmeraum 16 weist Unterteilungen 28 auf. Hierdurch können unterschiedliche Arten an Waren angeboten werden. Oft ist die Unterteilung 28 aus einer Trennwand gebildet, die wechselbar im Einsatz 14 angebracht wird. Die Anordnung der Unterteilung 28 direkt an der Aufnahme 18 für Ware hat sich hierbei als vorteilhaft erwiesen. Die Aufnahme 18 für Ware kann aus einer Wanne gebildet sein, die eine Wellenstruktur aufweist. Auch der Einsatz einer brettartigen Aufnahme 18 kann je nach Warenart sinnvoll sein. Es entstehen somit verschiedene Aufnahmeräume 16, die mittels einer Abdeckung 24 vor Verunreinigung geschützt sind. Die Ausführungsformen von Abdeckungen 24 sind vielfältig und richten sich nach der Art der Ware und den damit verbundenen gesetzlichen Vorschriften. Es hat sich als vorteilhaft erwiesen für den Abverkauf von Backwaren, insbesondre Brot, Brötchen und anderen Backwaren für jeden Teilbereich der Aufnahmeraumes als Abdeckungen 24 Türen einzusetzen. Diese sind horizontal drehbar am Einsatz 14 gelagert und vorzugsweise mit einem Dämpfungselement 48 ausgestattet. In den vorliegenden Darstellungen sind jeweils drei Türen gezeigt. Diese ist ferner mit einem Griff 25 ausgestattet. Die Ausgabevorrichtung 10 ist hierbei aus vier Einsätzen 14 gebildet, die übereinander angebracht sind. Hierbei weist jeder Einsatz 14 vorzugsweise eine Fläche von 100 cm auf 100 cm auf. Andere, insbesondere kleinere Flächen, sind auch denkbar.

Die Fläche des Einsatzes 14 liegt vorzugsweise im Bereich von ca. 80 bis 100 cm auf 45 bis 100 cm.

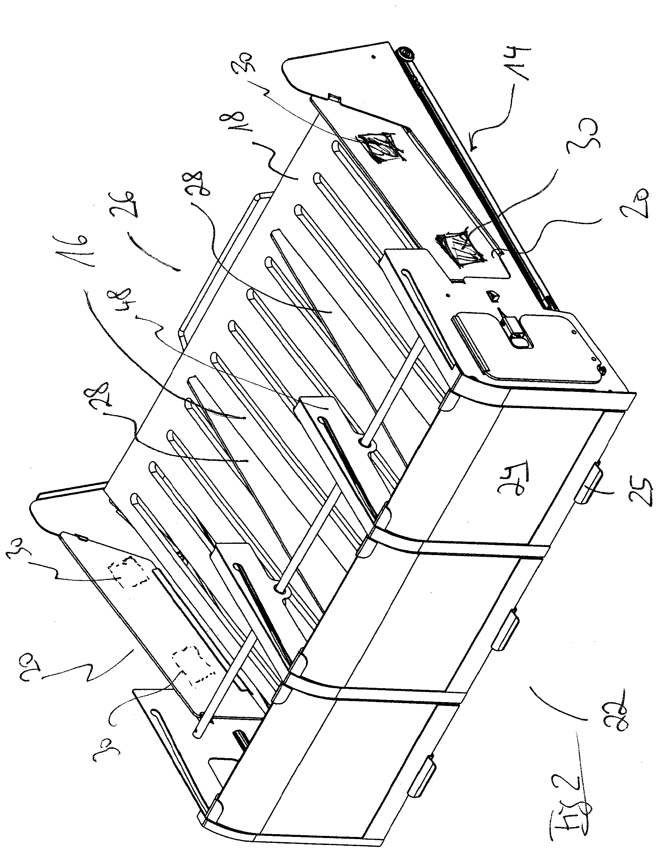

Es hat sich als sinnvoll erwiesen, den Einsatz 14 wie in Fig. 2 dargestellt, schubladenförmig auszuführen. Das erleichtert die Reinigung und ggf. auch die Bestückung. In Hinblick auf die Bestückung sind zwei Möglichkeiten geben. Entweder ist eine rückseitige Bestückungsöffnung 26 oder eine frontseitige Bestückung über die frontseitige Entnahmeöffnung 22 vorgesehen.

Der Einsatz von anderen Ausführungsformen an Abdeckungen 24 ist denkbar. So kann beispielsweise die Abdeckung 24 aus einer nahezu vollflächigen Struktur gebildet sein, die mit kleinen Öffnungen für das Herausnehmen der Ware unterbrochen ist. Die Anzahl an Öffnungen ist hierbei frei wählbar. Eine Anzahl von drei hat sich als sinnvoll erwiesen.

Vorzugsweise zur einfacheren Entnahme und besseren Präsentation ist die Ausgabevorrichtung 10 geneigt in Richtung der Entnahmeöffnung 22 angeordnet. Hierfür ist im Bereich der Rückseite der Ausgabevorrichtung 10 eine entsprechende Vorrichtung vorgesehen. Ein Neigungswinkel von 1° bis 10° hat sich hierbei als vorteilhaft erwiesen.

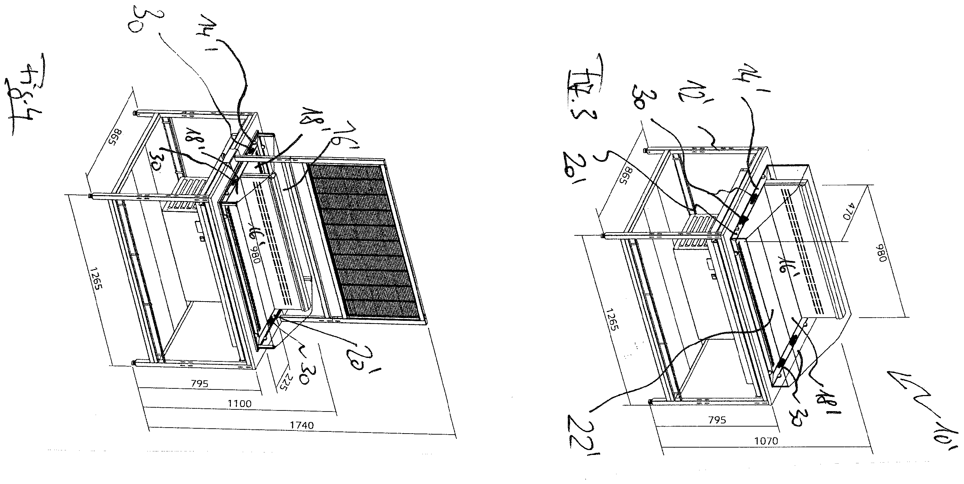

Die Figuren 3 und 4 zeigen eine alternative Ausführung einer Ausgabevorrichtung 10'. Eine solche Ausgabevorrichtung 10' ist vorzugsweise als Verkaufstisch ausgeführt, wie er in Selbstbedienungsläden verwendet wird. Es besteht die Möglichkeit, eine Kühleinheit vorzusehen. Die Kühleinheit ist hierbei meist unterhalb des Einsatzes 14' positioniert.

Die Ausgabevorrichtung 10' weist ein Gestell 12' mit einer Aufnahme 10' für Ware auf. Die Ware ist in einem Einsatz 14' angeordnet. Es ist eine frontseitige Entnahme 22' der Ware vorgesehen. Die Ware kann hierbei verpackt oder unverpackt sein.

Figur 3 zeigt eine Ausführung einer Ausgabevorrichtung 10' wie sie üblicherweise angrenzend an eine Wand eingesetzt wird. Es ist eine Vorrichtung 10' verwendet, die einen Einsatz 14' für Ware aufweist. Der Warenaufnahmeraum 16' ist offen ausgeführt.

Figur 4 zeigt weiterhin eine Ausgabevorrichtung, die als so genannte Mittelraumlösung im Verkaufsraum aufgebaut ist. Hierbei finden ein oder alternativ zwei Einsätze 14' Verwendung, die durch eine Wandeinheit abgetrennt sind. Auch die Aufnahme 17' kann ein oder zweiteilig ausgeführt sein und ist meist durch eine Wandeinheit getrennt. In dieser Wandeinheit kann ebenfalls eine Kälteeinheit bzw. die Öffnungen für das Entweichen gekühlter Luft vorgesehen sein.

Die Größe des Einsatzes 14' beträgt vorzugsweise ca. 47 cm auf ca. 98 cm. Eine andere Größe im Bereich von 80 bis 100 cm auf 45 bis 100 cm ist möglich und findet üblicherweise Einsatz.

Um die auf einer Aufnahme 18, 18' befindliche Masse der Waren bestimmen, entsprechend erfassen und auswerten zu können, ist die Aufnahme 18, 18' mit mindestens einem Wägesensor 30 verknüpft.

Es hat sich hierbei als sinnvoll erwiesen, dass der mindestens eine Wägesensor 30 an einer seitlichen Wandung 20, 20' des Einsatzes 14, 14' angeordnet ist. Der mindestens eine Wägesensor 30 ist vorzugsweise an der Außenseite der Wandung 20, 20' ortsfest angeordnet. In einer weiteren alternativen Ausführungsform ist der Wägesensor 30 mit einer zusätzlichen Abdeckung versehen oder in eine Schutzwandung integriert.

Üblicherweise beträgt die Größe des Einsatzes 14, 14' eine Größe im Bereich von ca. 80 bis 100 cm auf 45 bis 100 cm. Bei dieser Abmessung findet vorzugsweise eine Anzahl von vier Wägesensoren 30 Verwendung.

Die vier Wägesensoren 30 sind gegenüberliegend an der seitlichen Wandung 20, 20' des Einsatzes 14, 14' ortsfest angeordnet.

Der Einsatz von Dehnungsmessstreifen als Wägesensoren 30 hat sich zweckmäßig erwiesen. Diese sind wartungsfrei und die Anordnung an der Wandung 20, 20' des Einsatzes 14, 14' verhindern sowohl eine Verschmutzung, z.B. bei Backwaren, als auch eine Beschädigung, wenn beispielsweise die Aufnahme 18, 18' zum Reinigen herausgenommen wird.

Bei Verwendung eines kleineren Einsatzes 14 ist eine geringere Anzahl an Wägesensoren 30 ausreichend. So reichen beispielsweise zwei Wägesensoren 30 aus.

Zur Dimensionierung der Wägesensoren 30 wird berücksichtigt, dass die Waren pro Stück ca. eine Masse in einem Bereich von 20g bis 2 kg aufweisen.

Solche Wägesensoren 30 sind aus dem Stand der Technik bekannt und käuflich zu erwerben.

Jeder Wägesensor 30 ist hierbei vorzugsweise für eine Masse im Bereich von 6 bis 30 kg ausgelegt.

Die Genauigkeit der Messung mittels der Wägesensoren 30 bei den absoluten Werten in Gramm oder Kilogramm, sowie einer möglichen Gewichtsdifferenz bei der Entnahme ist derart ausgelegt, dass auch kleine Massen von bis zu ca. 20g erfassbar sind.

Die Wägezellen 30 werden über ein Bussystem und/oder mittels Funk mit Daten versorgt. Die Stromversorgung erfolgt über ein Bussystem oder Batterien.

Sofern eine Beleuchtung der Einsätze 14, 14' vorgesehen ist, erfolgt dies über eine Leuchtvorrichtung, vorzugsweise in Form von LEDs. Je nach Füllstand kann die Farbe eines Einsatzes 14, 14' veränderbar sein. Es ist denkbar, dass bei einem leeren Einsatz 14, 14', d.h. es befindet sich keine Ware mehr in diesem Einsatz 14, 14', die Beleuchtung komplett abschaltet. Auch bei der Annäherung eines Kunden an die Vorrichtung 10, 10' ist denkbar, dass die Leuchtvorrichtung aktiviert wird oder z.B. die Beleuchtung heller geschaltet wird.

In einer weiterführenden Ausführung findet ein Vorschubsystem Anwendung, wodurch die Waren meist mittels Federkraft in Richtung Entnahmeöffnung 22 geschoben werden können.

Die Aufnahme 18, 18' kann weitere Teilungseinheiten aufweisen. Diese können vorzugsweise wechselbar an der Aufnahme 18, 18' angeordnet werden.

Es hat sich als vorteilhaft erwiesen, dass ein Herausnehmen der Ware und ein Zurücklegen der Ware von den Wägesensoren 30 erkannt wird. Gerade beim Abverkauf von Lebensmitteln gilt es die gesetzlichen Vorschriften einzuhalten. Sofern es sich um unverpackte Waren wie z.B. Brötchen handelt, sollte ein Zurücklegen von bereits entnommener Ware zurück in die Ausgabevorrichtung 10, 10' unterbunden werden. Es bietet sich daher an, dass eine Gewichtszunahme z.B. durch das Zurücklegen mittels des Wägesensors 30 erkannt werden kann und vorzugsweise ein Signal erfolgt. Dieses Signal kann optischer Natur sein, auch ist ein akustisches Signal denkbar. Das Signal kann hierbei sowohl den Kunden darauf hinweisen, dass ein Zurücklegen bereits entnommener Ware nicht gestattet ist; es hat sich aber auch als sinnvoll erwiesen, das jeweilige Personal eines Selbstbedienungsmarktes hierüber zu informieren. Hierfür bietet es sich an, dass eine Anzeigevorrichtung an die Ausgabevorrichtung 10, 10' gekoppelt ist, die Informationen jeweils über den aktuellen Bestand, den Zugang und den Abgang von Waren darstellt, wobei hierbei die Daten entsprechend dokumentiert und bei Bedarf ausgewertet werden können.

In Hinblick auf einen optischen Hinweis, dass es nicht erlaubt ist, Ware zurückzulegen, bietet sich an, dass der Einsatz 14, 14' mit einer Leuchtvorrichtung vorgesehen ist. Diese ändert ihre Farbe oder leuchtet dann auf, wenn eine solche unerlaubte Handlung durchgeführt wird. Hierbei ist ein Wechsel der Farbe z.B. von einer grünen in eine rote Farbe denkbar. Auch könnte ein Blinken der Leuchtvorrichtung z.B. in roter Farbe vorgesehen sein.

Es hat sich auch als sinnvoll erwiesen, dass eine optische Kennzeichnung erfolgt, um den Kunden darauf hinzuweisen, wo die gewünschte Ware in der Ausgabevorrichtung 10, 10' liegt. Dies kommt dann zum Einsatz, wenn z.B. eine Suchanfrage über eine Smartphone-APP oder ein Kundenterminal erfolgt. Hierbei ist eine Farbänderung denkbar oder aber ein Blinken der Leuchtvorrichtung, insbesondere der LEDs.

Es besteht ein übergeordnetes System zur Erfassung, Verarbeitung und Auswertung und/oder Visualisierung von Daten der Ausgabevorrichtung 10, 10'.

Vordergründig geht es um Daten zu dem Bestand der beschriebenen Ausgabevorrichtung 10, 10'.

Hierfür ist eine Anbindung an wenigstens eine Anzeigevorrichtung, zu einem Warenwirtschaftssystem und/oder weiteren Datenverarbeitungsprogrammen vorgesehen.

Vorzugsweise erfolgt dies über eine Schnittstelle zwischen der eigentlichen Ausgabevorrichtung 10, 10' und einer Anzeigevorrichtung, sowie eine Schnittstelle zwischen der Ausgabevorrichtung 10, 10' und/oder der Anzeigevorrichtung und einem Warenwirtschaftssystem und/oder weiteren Datenverarbeitungsprogrammen .

Hierbei können beispielsweise folgende Daten erfasst, verarbeitet, ausgewertet und/oder visualisiert werden:
- Art oder Name der Ware,
- Masse [in Gramm oder Kilogramm],
- Anzahl [in Stück] pro Aufnahme 18, 18' und/oder Einsatz 14, 14' und/oder Vorrichtung 10,10',
- Angabe [in %] zum Befüllungsstand pro Aufnahme 18, 18' und/oder Einsatz 14, 14' und/oder Vorrichtung 10,10'.

Bei einem niedrigen Bestand in einer Aufnahme 18, 18' hat es sich als sinnvoll erwiesen, dass ein Signal an das Personal erfolgt, dass eine Befüllung in der entsprechenden Aufnahme 18, 18' mit Ware in einer vorgegebenen Menge vorzunehmen ist. Das Signal erfolgt vorzugsweise auf der Anzeigevorrichtung, die überwiegend durch das Personal genutzt wird. Andere Arten der Signalweiterleitung an das Personal werden nachfolgend beschrieben.

In einer weiterführenden Version interagiert die Ausgabevorrichtung 10, 10' mit dem Kunden. Z.B. wird die Beleuchtung bei Annäherung eines Kunden aktiviert, d.h. die Beleuchtung schaltet sich ein, wird stärker oder aber die Farbe der Beleuchtung ändert sich.

Der Bewegungsablauf jedes Kunden vor der Ausgabevorrichtung 10, 10' wird vorzugsweise über ein begrenzt lokales System (z.B. Docker) oder ein Cloud-System überwacht. Standardabläufe für die Bewegung eines Kunden an der Vorrichtung 10, 10' sind im System gespeichert/hinterlegt und werden mit neuen Mustern verglichen.

Es besteht auch die Möglichkeit, neue Abläufe oder Veränderungen in dem System zu ergänzen und diese als erlernte neue Muster aufzunehmen und entsprechend zu ergänzen. Beispielhaft wären hier zu nennen: ein Umbau im Markt, eine veränderte Anordnung der Vorrichtung 10, 10' oder ein versperrter Zugriff.

Die Daten über die Bewegungsabläufe des Kunden werden somit erfasst, verarbeitet, ausgewertet und/oder ggf. visualisiert. Es ist dann somit z.B. eine Auswertung darüber möglich, wie lange sich ein Kunde vor dem Ausgabevorrichtung 10, 10' aufgehalten hat, welche Ware er in welcher Anzahl entnommen hat, wie hoch der Kaufpreis der entnommenen Waren ist.

Die Erfassung der Position eines Kunden erfolgt hierbei über eine der bekannten Techniken wie z.B.:
- Kamerasysteme
- GPS
- Erdmagnetfeld
- Triangulation oder Bereichserkennung von bzw. anhand bestehender Funknetze
- Nutzung der angebotenen Lokalisierungsfunktionen der genutzten Datenübertragungsnetzte und/oder
- Indoor-Lokalisierungstechniken wie WIFI, LIFI, Beacons, BLE, RFID, Ultraschall, Radar usw.

Die erfassten Daten können für weitere Vorhersagen Verwendung finden. Im Vordergrund steht hierbei jeweils die für einen vorgegebenen Zeitraum benötigte jeweilige Warenart sowie die Warenmenge.

Da diese auch von weiteren externen Daten wie Wetter, Jahreszeit und/oder Verkehr abhängig sein kann, macht eine Verwendung weiterer Daten u.U. und je nach Bedarf Sinn.

Um weiterhin die Vorhersagen zu verbessern, bedient man sich geeigneter KI-Systeme.

Weiterhin kann das System an Backvorrichtungen gekoppelt sein. Diese sind meist im Bereich solcher Ausgabevorrichtungen 10 angeordnet. Mithilfe der vorliegenden Daten kann das System dem Personal Backzeiten und den Bedarf für das nächste Auffüllen der Backvorrichtungen bzw. der Einsätze 14 aufzeigen.

Auch ist denkbar, dass wenigstens ein zusätzlicher Monitor Informationen anzeigt. Hierbei könnte z.B. eine Begrüßung des Kunden dargestellt sein, ein besonderes Angebot angezeigt werden oder weitere Werbung gezeigt werden.

Der jeweils aktuelle Füllstand der Ausgabevorrichtung 10, 10' bzw. der Aufnahme 18, 18' und/oder des Einsatzes 14, 14' mit Ware ist im System hinterlegt und kann entsprechend abgefragt, kontrolliert und überprüft werden. Ist ein vorzugsweise vorgegebener minimaler Füllstand erreicht, erfolgt ein Signal. Dieses kann z.B. in Form einer Alarmierung über die Anzeigevorrichtung, ein Smartphone, eine Smartwatch, ein PSA oder ein Rufsystem vorzugsweise im Kassenbereich erfolgen.

Sofern ein Vorschubsystem Verwendung findet, hat es sich als sinnvoll erwiesen, dass dieses in der Lage ist, mit dem System zu kommunizieren. Das Vorschubsystem ermittelt den tatsächlichen Füllstand mit Ware in dem jeweiligen Fach bzw. dem Einsatz 14, 14'. Sofern der Füllstand gering wird oder aber keine Ware mehr vorhanden ist, erfolgt ein Signal und die Alarmierung, dass das Fach bzw. der Einsatz 14, 14' aufzufüllen ist.

Weiterhin macht es Sinn, dass zusätzliche Warnmeldungen angegeben werden können und entsprechend dem Personal ein Alarm gesendet wird. Eine Warnmeldung würde z.B. bei Überlast, Diebstahl von Ware, einer Manipulation oder verdächtigen Bewegungsmustern von Kunden ergehen.

Darüber hinaus ist denkbar, dass das System in einer weiterführenden Variante für zusätzliche Planungsfunktionen Einsatz findet. Neben dem im Vordergrund stehenden Warenbedarf wären hier auch die Personalplanung oder weitere betriebswirtschaftliche Kennzahlen zu nennen.

Auch ist denkbar, dass die Ausgabevorrichtung 10, 10' und das dazugehörige System Bestandteil einer vernetzten Plattform eines Marktes, Supermarktes, Warenhauses oder Einkaufszentrums ist und entsprechend eine Erfassung, Verarbeitung und Auswertung sowie eine Visualisierung der Daten im Rahmen einer solchen Plattform notwendig ist.

Weiterführend ist bei der Ausgabevorrichtung 10, 10' eine Vorrichtung vorgesehen, die das Ausdrucken eines Etikettes vorsieht. Hierbei besteht auch die Möglichkeit dynamische Preisanpassungen in einfacher Weise über das System vorzunehmen.

### Bezugszeichenliste

- 10, 10': Ausgabevorrichtung, Vorrichtung
- 12, 12': Gestell
- 14, 14': Einsatz
- 16, 16': Warenaufnahmeraum
- 18, 18': Aufnahme

- 20, 20': Wandung (Einsatz)
- 22, 22': frontseitige Entnahme, Entnahmeöffnung
- 24: Abdeckung
- 25: Griff
- 26: Rückseitige Bestückungsöffnung
- 28: Unterteilung

- 30: Wägesensor

- 48: Dämpfungselement

## Patentansprüche

1. Ausgabevorrichtung (10, 10') für Waren, mit einem Gestell (12, 12') und mit mindestens einer Aufnahme (18, 18') für Waren, angeordnet in einem Einsatz (14, 14'), mit einer frontseitigen Entnahme (22, 22') **dadurch gekennzeichnet, dass** jede Aufnahme (18, 18') für Ware mit mindestens einem Wägesensor (30) verknüpft ist, wobei
der mindestens eine Wägesensor (30) an einer seitlichen Wandung (20, 20') des Einsatzes (14, 14') angeordnet ist und
als Wägesensoren (30) Dehnungsmessstreifen eingesetzt sind.

2. Ausgabevorrichtung (10, 10') nach Anspruch 1 oder 2, **dadurch gekennzeichnet, dass** vier Wägesensoren (30) Verwendung finden.

3. Ausgabevorrichtung (10, 10') nach Anspruch 3, **dadurch gekennzeichnet, dass** die vier Wägesensoren (30) gegenüberliegend an der seitlichen Wandung (20, 20') des Einsatzes (14, 14') angeordnet sind.

4. Ausgabevorrichtung (10, 10') nach einem der vorhergehenden Ansprüche, **dadurch gekennzeichnet, dass** sowohl das Herausnehmen von Ware und auch das Zurücklegen von Ware von den Wägesensoren (30) erkannt wird.

5. Ausgabevorrichtung (10, 10') nach einem der vorhergehenden Ansprüche, **dadurch gekennzeichnet, dass** der Einsatz (14, 14') eine Größe im Bereich von ca. 80 bis 100 cm auf 45 bis 100 cm aufweist.

6. Ausgabevorrichtung (10, 10') nach einem der vorhergehenden Ansprüche, **dadurch gekennzeichnet, dass** die Waren pro Stück ca. eine Masse in einem Bereich von 20 g bis 2 kg aufweisen.

## Claims

1. Dispensing apparatus (10, 10') for goods, having a frame (12, 12') and having at least one receptacle (18, 18') for goods, arranged in an insert (14, 14'), with a front removal means (22, 22'), **characterized in that** each receptacle (18, 18') for goods is linked to at least one weighing sensor (30), wherein
the at least one weighing sensor (30) is arranged on a side wall (20, 20') of the insert (14, 14'), and
strain gauges are used as weighing sensors (30).

2. Dispensing apparatus (10, 10') according to Claim 1 or 2, **characterized in that** four weighing sensors (30) are used.

3. Dispensing apparatus (10, 10') according to Claim 3, **characterized in that** the four weighing sensors (30) are arranged opposite one another on the side wall (20, 20') of the insert (14, 14').

4. Dispensing apparatus (10, 10') according to one of the preceding claims, **characterized in that** both the removal of goods and the replacement of goods are detected by the weighing sensors (30).

5. Dispensing apparatus (10, 10') according to one of the preceding claims, **characterized in that** the insert (14, 14') has a size in the range of approximately 80 to 100 cm to 45 to 100 cm.

6. Dispensing apparatus (10, 10') according to one of the preceding claims, **characterized in that** each item of goods has approximately a mass in a range from 20 g to 2 kg.

## Revendications

1. Dispositif de distribution (10, 10') destiné à des marchandises, ledit dispositif comprenant un cadre (12, 12') et au moins un moyen de réception (18, 18') destiné à des marchandises, disposé dans un insert (14, 14') et muni d'un moyen de retrait frontal (22, 22'), **caractérisé en ce que** chaque réceptacle (18, 18') destiné à des marchandises est relié à au moins un capteur de pesée (30),
l'au moins un capteur de pesée (30) étant disposé sur une paroi latérale (20, 20') de l'insert (14, 14') et
des jauges de contrainte étant utilisées comme capteurs de pesée (30).

2. Dispositif de distribution (10, 10') selon la revendication 1 ou 2, **caractérisé en ce que** quatre capteurs de pesée (30) sont utilisés.

3. Dispositif de distribution (10, 10') selon la revendication 3, **caractérisé en ce que** les quatre capteurs de pesée (30) sont disposés en vis-à-vis sur la paroi latérale (20, 20') de l'insert (14, 14').

4. Dispositif de distribution (10, 10') selon l'une des revendications précédentes, **caractérisé en ce que** aussi bien la sortie de marchandises que la remise de marchandises sont détectées par les capteurs de pesée (30).

5. Dispositif de distribution (10, 10') selon l'une des revendications précédentes, **caractérisé en ce que** l'insert (14, 14') a une dimension d'environ 80 à 100 cm sur 45 à 100 cm.

6. Dispositif de distribution (10, 10') selon l'une des revendications précédentes, **caractérisé en ce que** les marchandises ont chacune environ une masse de 20 g à 2 kg.
